(19) **Europäisches Patentamt**
**European Patent Office**
**Office européen des brevets**

(11) **EP 2 816 859 B1**

(12) **EUROPEAN PATENT SPECIFICATION**

(45) Date of publication and mention
of the grant of the patent:
**22.02.2017 Bulletin 2017/08**

(51) Int Cl.:
***H04W 72/12*** *(2009.01)*

(21) Application number: **13305852.9**

(22) Date of filing: **21.06.2013**

(54) **Control of a downlink radio frequency transmission from a multi-channel base station**

Steuerung einer Downlink-Hochfrequenzübertragung von einer mehrkanaligen Basisstation

Commande d'une transmission de fréquence radio de liaison descendante provenant d'une station de base à canaux multiples

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.12.2014 Bulletin 2014/52**

(73) Proprietor: **ALCATEL LUCENT**
**92100 Boulogne-Billancourt (FR)**

(72) Inventors:
• **Destounis, Apostolos**
**91620 NOZAY (GR)**
• **Sayadi, Bessem**
**91620 NOZAY (FR)**
• **Debbah, Mérouane**
**75014 PARIS (FR)**
• **Assaad, Mohamad**
**92340 Bourg la reine (FR)**

(74) Representative: **Berthier, Karine et al**
**Alcatel-Lucent International**
**148/152, route de la Reine**
**92100 Boulogne-Billancourt (FR)**

(56) References cited:
• **MEHMET KARACA ET AL: "Efficient wireless scheduling with limited channel feedback and performance guarantees", PERSONAL INDOOR AND MOBILE RADIO COMMUNICATIONS (PIMRC), 2012 IEEE 23RD INTERNATIONAL SYMPOSIUM ON, IEEE, 9 September 2012 (2012-09-09), pages 106-111, XP032272696, DOI: 10.1109/PIMRC.2012.6362504 ISBN: 978-1-4673-2566-0**
• **MEHMET KARACA ET AL: "Smart scheduling and feedback allocation over non-stationary wireless channels", COMMUNICATIONS (ICC), 2012 IEEE INTERNATIONAL CONFERENCE ON, IEEE, 10 June 2012 (2012-06-10), pages 6586-6590, XP032274699, DOI: 10.1109/ICC.2012.6364878 ISBN: 978-1-4577-2052-9**
• **M. KARACA; Y. SARIKAYA; O. ERCETIN; T. ALPCAN; H. BOCHE: "Throughput optimal scheduling with dynamic channel feedback", ARXIV, 2012, XP002715722,**

**Description**

**TECHNICAL FIELD**

The present invention relates generally to the field of wireless communications, and, more particularly, to a method and corresponding base station for scheduling multi-user transmission in the downlink of a wireless communication system.

**BACKGROUND**

Wireless communications systems or mobile telecommunication systems typically provide different types of services to different users or subscribers of wireless communication devices. A wireless communications system generally includes one or more base stations (BSs) that can establish wireless communications links with mobile stations (MSs). Base stations may also be referred to as access points. A wireless communications link between a mobile station (MS) and a base station (BS) may use an uplink from a mobile station to a base station and a downlink in the reverse direction.

Using the uplink and downlink, both control and user information may be transmitted between the mobile station and the base station over an air interface that may use a suitable wireless communications medium, such as radio frequency (RF) signals. To establish the wireless communications link for a connection or session, the base station typically includes radio transceivers to transmit and receive radio frequency signals. Over the uplink, signaling information and user information may be received over the air interface at a base station. Over the downlink, signaling information and user information may be transmitted over the air interface on designated radio frequency channels from a base station. For example, in OFDMA systems like LTE where each channel is a frequency band, or in systems with multiple antenna base stations using orthonormal beamforming, such as MIMO LTE systems, the downlink is made over N channels associated with a base station and may serve a plurality of users, K, that generally compete for the same wireless communication resources. A user terminal, such as the mobile station may comprise a receive antenna or a multiplicity of receive antennas. Using user channels, transmissions from the base station to the MS may be performed in time slots, e.g., of size $T_S$, over the downlink. When serving a plurality of users, data destined for each user are buffered in a corresponding queue at the base station, and the base station schedules transmissions to different users so as to optimizing the network performance of a wireless network. To maximize the wireless communication system capacity, the base station may transmit to the user with the best instantaneous channel. On the other hand, it is also an issue to guarantee a finite delay in each queue.

In this context, several transmission schemes depending on the channel conditions and the availability of receiver and transmitter information about the state of the channel have been developed. Typically, the transmission schemes are controlled by a scheduler in the base station controller.

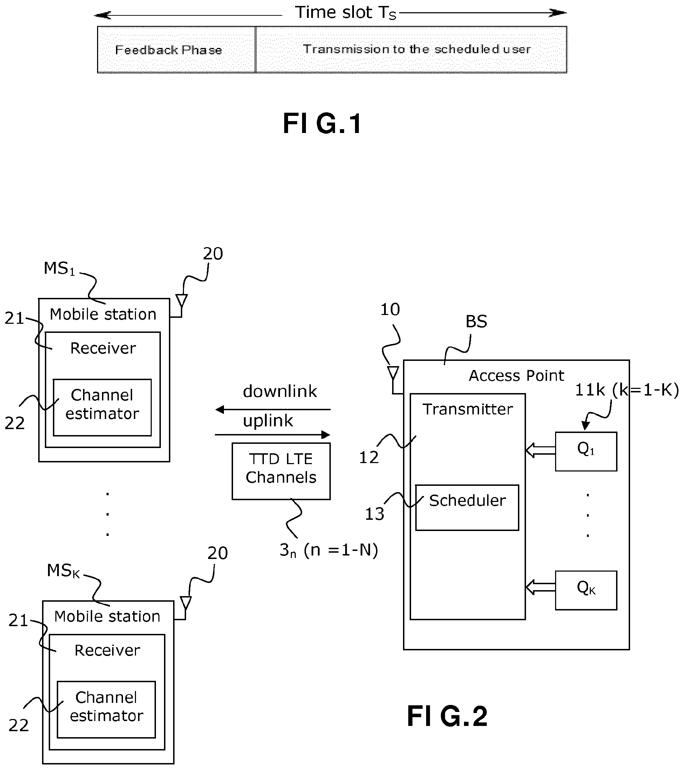

In most of known communications system, transmitter knowledge of the channel conditions is obtained using a feedback link from the receiver to the transmitter. In particular, in Time Division Duplex (TDD) closed-loop communication systems, the users transmit their channel state information for each carrier at each time slot within a feedback phase, and then transmission from the base station to a scheduled user is done for the rest of the slot. The feedback phase takes thus a fraction of time over the duration $T_S$ of a timeslot, as represented in figure 1. This results in a reduction of the available bandwidth for sending data. Thus, a selective feedback scheme must be devised to strike a good balance between finding a good user to transmit data to and leaving a big portion of the time within each time slot for data transmission.

Typically scheduling algorithms do not take the time needed to feed back a channel into account, even if the feedback is actually done in TDD mode. For instance, most works try to minimize the feedback rate and/or the bandwidth consumed by feedback if done in FDD mode (i.e. when feedback is done on separate frequency band than the bands used for transmission).

Paper entitled « Maxweight scheduling in a generalized switch: State space collapse and workload minimization in heavy traffic », A. L. Stolyar, Annals of Applied Probability, vol. 14, no. 1, pp. 1-53, Nov. 2004, discloses a method for scheduling the best user at each channel while achieving a finite delay delivery by using a MaxWeight scheduling strategy. According to this strategy, the base station selects scheduling the user having the maximum product of queue length and achievable rate, expressed by

$$Q_i(t) \times R_{in}(t)$$

where $Q_i(t)$ denotes the queue length of user i in the beginning of the time slot t and $R_{in}(t)$ denotes the achievable rate of users i in channel n (with integer i varying from 1 to K and integer n varying from 1 to N).

This can be implemented only if the achievable rates are known through feedback by the users, but the paper is silent about the problem raised by the duration of the feedback phase.

Moreover, previous works in this setting (i.e. with FDD and/or TDD feedback) have focused on maximizing the total average throughput of the system. However, in general this is not sufficient to guarantee finite delays, even in cases where they could be guaranteed by some other algorithm.

This issue has appeared lately in a couple of works for single carrier systems. In document « Scheduling with limited information in wireless systems », P. Chaporkar, A. Proutiere, H. Asnani, and A. Karandikar, in Proc. of ACM Mobihoc '09, 2009, pp. 75-84, a centralized solution where the base station sequentially requests feedback from specific users has been proposed. However, the base station must have knowledge of the channel statistics of every user, which may not be feasible in practice.

Paper entitled « Throughput optimal scheduling with dynamic channel feedback », M. Karaca, Y. Sarikaya, O. Ercetin, T. Alpcan, and H. Boche, retrieved from ArXiv, 2012 discloses a scheme where the channel state of the user with the biggest queue length is first obtained by the base station, and then transmitted to other users for acting as a threshold to feed back. However, when the number of users and/or the time for each user to feed back becomes large, this Scheduling Dynamic Feedback, SDF, scheme can also be inefficient, since many users will still feed back taking up time from the transmission phase.

There is thus a need to propose an opportunistic feedback protocol which would reduce the feedback requirements, in order to have a scheduler which is able to manage a large number of users without wasting radio resources of the communication system.

## SUMMARY OF EXEMPLARY EMBODIMENTS

Some embodiments relate to a method of controlling a radio frequency transmission over a downlink to at least one mobile station among a plurality of mobile stations, from a multi-channel base station in a wireless Time Division Duplex closed-loop communication system, said method comprising the following steps at the base station:

buffering data destined to each of said plurality of mobile stations in a corresponding queue;
starting a feedback phase by obtaining for each channel a first channel state corresponding to the achievable rate of the mobile station with the biggest queue length, during a feedback elementary period corresponding to a fraction of a time slot;
estimating for each channel first values representative of a gain in knowing the achievable rates of each of the other mobile stations based on the obtained first channel state, on said biggest queue length and on the queue length associated with each of the other mobile stations;
stopping the feedback phase and scheduling for the rest of the associated timeslot said mobile station with the biggest queue length on selected channels for which corresponding first values are greater than a first threshold value; else
continuing the feedback phase only for non-selected channels by broadcasting said first channel state to the other mobile stations on each non-selected channel.

In some embodiments, said estimating for each channel said first values comprises calculating each of said first values according to the expression

$$\frac{1-\beta}{1-3\beta} \times \frac{Q_{k*}(t)}{Q_k(t)} \times R_{k*n}(t)$$

where

$R_{k*n}(t)$ is the obtained first channel state for channel n,
$\beta$ is the fraction of the time slot for a feedback elementary period,
$Q_{k*}(t)$ is the biggest queue length, and
$Q_k(t)$ is the queue length associated with a mobile station k.

In some embodiments, continuing the feedback phase further comprises, for each non-selected channel:

a) obtaining the channel states of a subset of mobile stations among said other mobile stations, wherein said subset is limited to the mobile stations having a channel state greater than the obtained first channel state;

b) identifying within said subset the best candidate for scheduling based on the obtained channel states and on the queue lengths associated with the mobile stations for which a channel state has been obtained;

c) estimating second values representative of a gain in knowing the channel states of each of the mobile stations not belonging to said subset based on the obtained channel states, on the queue length of said each of the mobile stations not belonging to said subset, and on the queue lengths associated with the mobile stations for which a channel state has been obtained;

d) stopping the feedback phase and scheduling for the rest of the associated timeslot said best candidate on second selected channels for which corresponding second values are greater than said first threshold value; else

e) continuing the feedback phase only for a new subset of non-selected channels by repeating steps a) to e).

The step of identifying within said subset the best candidate may comprise finding a mobile station i of said subset which meets the expression

$$\max_{i \in U_n(m)} \left( Q_i(t) \times R_{in}(t) \right)$$

where $U_n(m)$ represents the set of mobile stations associated with channel n for which a channel state has been obtained,

$Q_i(t)$ is the queue length of mobile station i, and

$R_{in}(t)$ is the obtained channel state for mobile station i and channel n.

In some embodiments, estimating said second values comprise calculating each of said second values according to the expression

$$\frac{1 - m\beta}{1 - (m+1)\beta} \cdot \frac{\max\limits_{i \in U_n(m)} \left( Q_i(t) \times R_{in}(t) \right)}{Q_k(t)}$$

where

$U_n(m)$ represents the set of mobile stations associated with channel n for which a channel state has been obtained,

$R_{in}(t)$ is the obtained channel state for mobile station i and channel n,

$Q_i(t)$ is the queue length of mobile station i,

$\beta$ is the fraction of the time slot for a feedback elementary period, and

$Q_k(t)$ is the queue length associated with a mobile station k.

The channel states of the subset may consist of the achievable rates of the mobile station users of the subset. Similarly, the first channel state may consist of the achievable rate of the mobile station with the biggest queue length. In this case, the achievable rates are calculated by the mobile stations using a pilot sequence broadcast by said base station.

In one embodiment of the present invention, a multi-channel base station in a wireless Time Division Duplex closed-loop communication system is provided, said multi-channel base station comprising:

a plurality of queues for buffering data destined to a plurality of mobile stations; and
a scheduler,

characterized in that said scheduler is configured to:

start a feedback phase by obtaining for each channel a first channel state corresponding to the achievable rate of the mobile station with the biggest queue length, during a feedback elementary period corresponding to a fraction of a time slot;

estimate for each channel first values representative of a gain in knowing the achievable rates of each of the other mobile stations based on the obtained first channel state, on said biggest queue length and on the queue length associated with each of the other mobile stations;

stop the feedback phase and scheduling for the rest of the associated timeslot said mobile station with the biggest queue length on selected channels for which corresponding first values are greater than a first threshold value; else continue the feedback phase only for non-selected channels by broadcasting said first channel state to the other mobile stations on each non-selected channel.

Additional aspects of embodiments will be set forth, in part, in the detailed description, figures and any claims which follow, and in part will be derived from the detailed description. It is to be understood that both the foregoing general description and the following detailed description are only exemplary and do not limit the claimed inventions.

## BRIEF DESCRIPTION OF THE DRAWINGS

Some embodiments of apparatus and/or methods will become more fully understood from the detailed description given herein below and the accompanying drawings which are given by way of illustration only and thus are not limiting of the present invention and wherein:

Figure 1 is a schematic diagram illustrating a feedback elementary period corresponding to a fraction of a time slot;
Figure 2 schematically depicts a multiple-input/multiple-output (MIMO) wireless system where a multi-channel base station may schedule multi-user transmission in a downlink; and
Figures 3a and 3b are flow diagrams schematically illustrating one example embodiment of a method for scheduling which may be implemented in the base station of Figure 2.

## DETAILED DESCRIPTION

While example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more detail, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figure. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/ or "including," when used herein, specify the presence of stated features, integers, steps, operations, elements and /or components, but do not preclude the presence or addition of one or more other features, integers, steps, operations, elements, components and /or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

As used herein, the term "mobile station" may be considered synonymous to, and may hereafter be occasionally referred to, as a client, user equipment, mobile user, mobile, subscriber, user, remote station, access terminal, receiver, etc., and may describe a remote user of wireless resources in a wireless communication network.

Similarly, as used herein, the term "base station" may be considered synonymous to, and may hereafter be occasionally referred to, as a Node B, evolved Node B, base transceiver station (BTS), access pointetc., and may describe a transceiver in communication with and providing wireless resources to mobiles in a wireless communication network. As discussed herein, base stations may have all functionally associated with conventional, well-known base stations in addition to the capability to perform the methods discussed herein.

Referring to figure 2, a LTE TDD system capable of multi-channels communications is illustrated to include an access point, such as a base station BS, which may provide wireless connectivity over a wireless network to a plurality of mobile stations, such as cells phones, PDAs or laptops. As previously indicated, the scheduling according to embodiments of the invention also applies to a large set of systems having orthogonal parallel channels for data transmission using TDD, such as Multiple-In/Multiple-Out (MIMO) LTE systems.

In the following, we consider the downlink of base station BS with K mobile stations $MS_1$ to $MS_K$ and N possible channels. The base station BS may comprise an antenna 10 to receive signals from the plurality of mobile stations $MS_1$ to $MS_K$ over the uplink, e.g. when the mobile stations have to feed their associated state of channel back to the base station. Same antenna 10 may also be used for transmitting data to said plurality of mobile stations $MS_1$ to $MS_K$ over the downlink. Data destined for each user get buffered in a corresponding queue $11_k$ (k varying from 1 to K) at the base station BS.

To enable the RF transmission to the plurality of mobile stations $MS_1$ to $MS_K$, the base station BS may comprise a transmitter 12 with a scheduler 13 to schedule, on a selected channel among the N possible channels $3_n$ (n from 1 to N), a selected user for a directional transmission to the mobile station of said selected user. Scheduler 13 knows the queue length $Q_k(t)$ for the queue $11_k$ of each user k. Each mobile station $MS_1$ to $MS_K$ may comprise an antenna 20 for exchanging signals with base station BS, e.g. for feeding the channel states back to the base station to help the base station in the scheduling processing. To enable the RF communication over the downlink, each mobile phone $MS_1$ to $MS_K$ may include a receiver 21. The receiver 21 may comprise a channel estimator 22 for estimating when requested the channels states, e.g. the achievable rate of the mobile phone for each channel.

On the downlink, Time Division Multiplexing (TDM) may be used to transmit data from the base station BS to mobile stations $MS_1...MS_K$. Downlink transmissions occur on each channel at fixed time intervals, or timeslots. In the following description, it is assumed that a timeslot has a fixed duration of $T_S$, e.g. 1,667 ms, and that the time used for feedback from any one of the mobile stations is $\beta T_S$, where $\beta$ is lesser than 1. In other words, $\beta$ is the fraction of the time slot for a feedback elementary period. L possible feasible rates for data transmission are assumed available at the base station depending on the modulation and coding scheme. The maximum achievable rate in a channel is denoted $r_L$ and is also known at the base station BS.

When applying a typical SDF scheme as disclosed in Paper entitled « Throughput optimal scheduling with dynamic channel feedback », from M. Karaca et al., at every channel n, first the mobile station with the maximum queue length, say $MS_{k^*}$, would be asked by base station BS to feed back, taking $\beta T_S$ of the timeslot. Let $R_{k^*n}(t)$ be the achievable rate of this mobile station $MS_{k^*}$ at channel n. Then, $R_{k^*n}(t)$ would be broadcasted and used as a threshold for the other mobile stations. More specifically, only the mobile stations whose rate is greater than $R_{k^*n}(t)$ would feed back. This broadcast would take $\beta T_S$ time as well.

The quantity $M_n(t)$ is now defined as the number of periods of $\beta T_s$ duration used in the feedback phase at channel n: For $M_n(t)=1$, only the channel state of the user with the maximum queue has been acquired. For $M_n(t) \geq 2$, the rate of the mobile station with the biggest queue has been broadcasted , and $M_n(t)-1$ mobile stations have fed back their channel states. The total duration of the feedback period is thus $\beta \times T_S \times M_n(t)$.

As already indicated above, such a solution can waste some time.

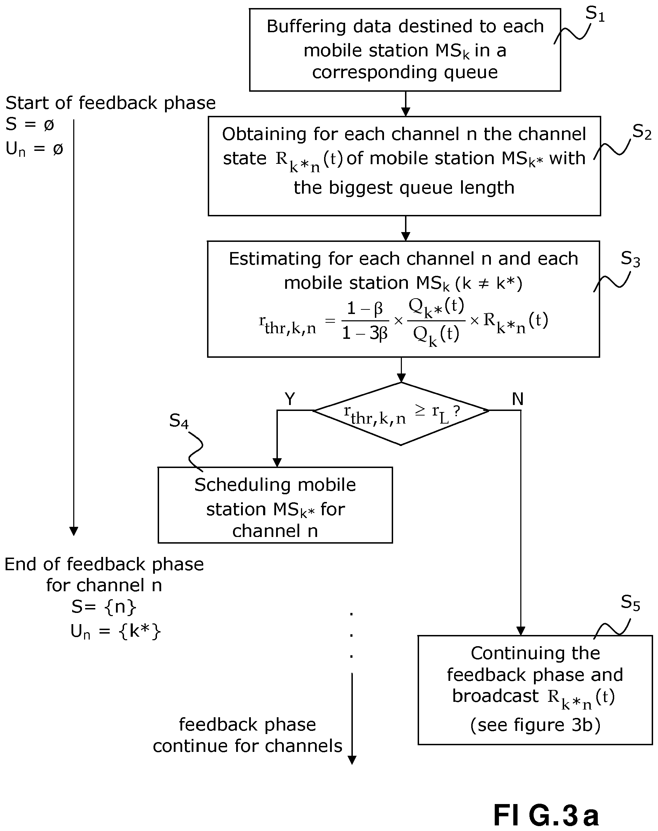

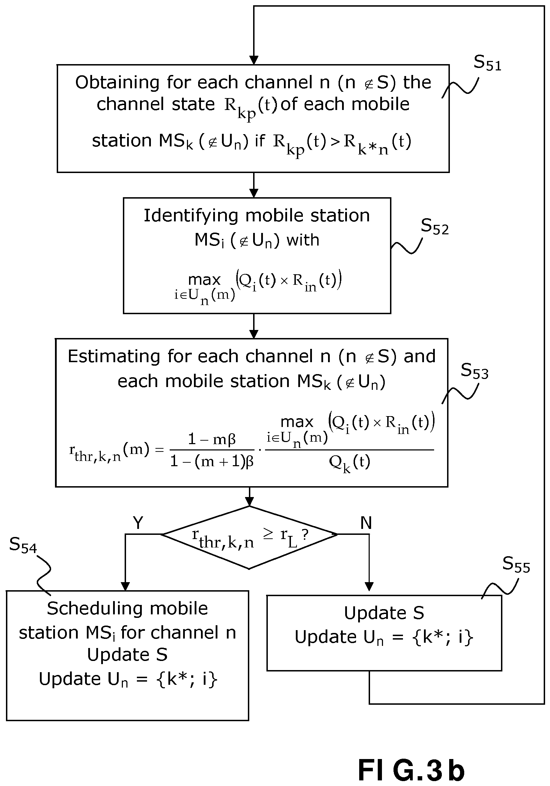

In order to guarantee a finite delay in each queue without taking too much time on the transmission slot, a method which can be implemented at the base station BS according to one embodiment will now be described referring to Figures 3a and 3b.

However, before going through the explanations of the different steps of the method shown in figures 3a and 3b, some mathematical equations need to be explained first.

The main idea behind the embodiments of the present invention comes from the observation that at eventually each channel only one mobile station will be scheduled and that, for every channel n the quantity

$$f_n(t) = (1 - \beta M_n(t)) \times R_{i(n)n}(t) \times Q_{i(n)} \qquad (1)$$

where $Q_{i(n)}$ denotes the queue length of mobile station $MS_i$ for channel n at the beginning of each time slot , has to be maximized in each timeslot in order to have the greatest possible stability region, while the achievable rate of a mobile station at a channel can be at most $r_L$.

Since the mobile stations feed back sequentially in every channel in TDD mode, the base station BS can advantageously stop the feedback process when it is sure that there cannot be further improvement, therefore using more time to transmit data.

To this end, the idea is that at the beginning of the time slot, the base station acquires the channel state $R_{k^*n}(t)$ of the mobile station with the maximum queue length, say mobile station $MS_{k^*}$, in all channels.

At channel n, the corresponding value of the quantity (1) if this user is scheduled for the rest of the slot would be $(1- \beta) \times Q_{k^*}(t) \times R_{k^*n}(t)$.

In contrast, if the base station lets the feedback phase run, the next $\beta$ fraction of the timeslot would be used for broadcasting $R_{k^*n}(t)$ as a threshold, and then for another fraction $\beta$ of the timeslot another mobile station, e.g. $MS_j$, with a corresponding channel state $R_{jn}(t)$ above this threshold will feed back. At the end of this, the corresponding expression of (1) would be

$$(1 - 3\beta)\max\{Q_{k^*}(t) \times R_{k^*n}(t), Q_j(t) \times R_{jn}(t)\}$$

Thus, there is a gain in continuing the feedback phase with broadcasting $R_{k^*n}(t)$ as a threshold and letting mobile station $MS_j$ feed its channel state $R_{jn}(t)$ only if

$$(1 - 3\beta)\max\{Q_{k^*}(t) \times R_{k^*n}(t), Q_j(t) \times R_{jn}(t)\} > (1 - \beta)Q_{k^*}(t) \times R_{k^*n}(t)$$

Therefore, after mobile station $MS_{k^*}$ feeds back, it is proposed that base station BS computes, for every other mobile station $MS_k$ ($k \neq k^*$), the following quantity is computed

$$r_{thr,k,n} = \frac{1 - \beta}{1 - 3\beta} \times \frac{Q_{k^*}(t)}{Q_k(t)} \times R_{k^*n}(t) \qquad (2)$$

said quantity corresponding to the minimum rate mobile station $MS_k$ ($k \neq k^*$) must have on channel n for $f_n(t)$ to increase, and thus to have a gain from not stopping the feedback phase.

If for some channels n there is $r_{thr,k,n} \geq r_L$ for every mobile station $MS_k$ ($k \neq k^*$), then there will be no improvement by continuing feedback since it is impossible that a mobile station will have highest rate than the maximum supported by the system. In this case, mobile station $MS_{k^*}$ is scheduled at these channels for the rest of the timeslot.

Turning now to figure 3a, a method of controlling a radio frequency transmission according to one embodiment comprises at least the following steps, performed at the base station BS, and executed starting from the beginning of every timeslot:

In the following, $U_n$ denotes the set of mobile stations that fed back at channel n and S is the set of the channels on which a mobile station has been scheduled. Both sets are empty at the beginning of the process, and are kept and updated in the base station BS, as will be explained in greater details below.

The method starts with buffering data destined to each of the mobile stations $MS_1$ to $MS_k$ in a corresponding queue $11_1...11_K$ (Step $S_1$).

In Step $S_2$, base station BS starts then a feedback phase comprising obtaining, for each channel n, a first channel state corresponding to the channel state of the mobile station with the biggest queue length. As already indicated, the duration of a feedback elementary period corresponds to a fraction $\beta$ of a time slot.

In this exemplary embodiment, the first channel state consists of the achievable rate $R_{k^*n}(t)$ of the mobile station $MS_{k^*}$ with the biggest queue length $Q_{k^*}$. This achievable rate is calculated by mobile station $MS_{k^*}$ using a pilot sequence broadcast by the base station BS.

Still during the feedback phase, base station BS estimates then, for each channel n, the values representative of a gain in knowing the channel states of each of the other mobile stations $MS_{k^*}$ ($k \neq k^*$), based on $R_{k^*n}(t)$, on said biggest queue length $Q_{k^*}$ and on the queue length $Q_k$ associated with each of the other mobile stations (Step $S_3$). At the end of step $S_3$, the base station BS has calculated K-1 values $r_{thr,k,n}$ for every mobile station $MS_k$ ($k \neq k^*$), based on relation (2).

These values are compared with a first threshold value, e.g. with the maximum achievable rate $r_L$ in a channel. In case, for one or some of the channels n, these values are greater or equal to $r_L$, the base station BS knows that there will be no gain in continuing the feedback phase for these channels. It will then decide to stop the feedback phase and to schedule mobile station $MS_{k^*}$ for the rest of the associated timeslot for these channels (Step $S_4$). All these channels selected for scheduling enter set S. Assuming channel n is a selected channel for scheduling, base station BS then updates the sets S and $U_n$ accordingly:

$$S = \{n\} \text{ and } U_n = \{k*\}$$

On the other hand, the feedback phase will continue at step $S_5$ the feedback phase only for non-selected channels (channels n with n not in set S) by broadcasting the channel state $R_{k*n}(t)$ to serve as threshold to the other mobile stations not scheduled yet (i.e. not belonging to $U_n$) on each non-selected channel.

The feedback phase could continue on these non-selected channels by applying a classical SDF scheme.

However, in preferred embodiments, the feedback phase comprises the steps now detailed in reference to figure 3b:

Once the mobile stations not belonging to $U_n$ have received the threshold $R_{k*n}(t)$, only the mobile stations belonging to a subset of mobile stations which channel state is greater than the threshold communicate their channel state to the base station. In other words, for the base station BS, the feedback phase is continued by obtaining, in step $S_{51}$, the channel states of this subset of mobile stations. In this exemplary embodiment, these channel states consist of the achievable rate $R_{kn}(t)$ of the mobile stations $MS_k$ within the subset, calculated by each mobile station $MS_k$ using the pilot sequence previously broadcast by the base station BS. At the end of this step, the set Un is updated by adding the mobile stations which have communicated their channel state.

Based on the channel states obtained at steps $S_2$ and $S_{51}$, and on the queue lengths associated with the mobile stations of $U_n$, the base station BS can identify if there is mobile station within the subset which would be a better candidate for scheduling than mobile station $MS_{k*}$. This step, shown as $S_{52}$ on figure 3b, may consist in finding a mobile station i of set $U_n$ which meets the expression

$$\max_{i \in U_n(m)} \left( Q_i(t) \times R_{in}(t) \right)$$

where $Q_i(t)$ is the queue length of mobile station i, and
$R_{in}(t)$ is the obtained channel state for mobile station i and channel n.

In a way similar to step $S_3$, base station BS estimates then, for each channel n, new values representative of a gain in knowing the channel states of each of the mobile stations $MS_k$ ($k \notin Un$) which has not feed back its channel state yet, based on the obtained channel states ($R_{kn}(t)$ with $k \notin U_n$), on the queue length ($Q_k(t)$ with $k \notin U_n$) of said each of the mobile stations not belonging to said subset, and on the queue lengths associated with the mobile station of said subset ($Q_k(t)$ with $k \in U_n$) (Step $S_{53}$). At the end of step $S_{53}$, the base station BS has calculated new values $r_{thr,k,n}$ for every mobile station $MS_k$ ($k \, k \notin U_n$), based on the following relation:

$$r_{thr,k,n}(m) = \frac{1 - m\beta}{1 - (m+1)\beta} \cdot \frac{\max\limits_{i \in U_n(m)} \left( Q_i(t) \times R_{in}(t) \right)}{Q_k(t)} \qquad (3)$$

These values are compared with the first threshold value $r_L$ in a channel. In case, for one or some of the channels n, these values are greater or equal to $r_L$, the base station BS knows that there will be no gain in continuing the feedback phase for these channels. It will then decide to stop the feedback phase and to schedule the best candidate $MS_i$ for the rest of the associated timeslot for these channels (Step $S_{54}$).

All these channels selected for scheduling enter set S. Base station BS then updates the set S and $U_n$ (Step $S_{55}$).

On the other hand, the feedback phase will continue for a new subset of non-selected channels by repeating steps $S_{51}$ to $S_{55}$.

The feedback phase ends when all channels have been either allocated to mobile stations or have no more mobile stations wanting to feed back; in the latter case, the mobile station with the maximum weight out of the ones that fed back in the channel is scheduled.

Thanks to the method described above, the stability region of the system has been increased with respect to the known schemes such as SDF scheme. This means that the system can support data users requesting higher data rates. In addition, the method helps to avoid sending useless information to the base station, improving consequently the power consumption in the system and its throughput.

Although some embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

**Claims**

1.    A method of controlling a radio frequency transmission over a downlink to at least one mobile station among a plurality of mobile stations ($MS_1...MS_K$), from a multi-channel base station (BS) in a wireless Time Division Duplex closed-loop communication system, said method comprising the following steps at the base station (BS):

buffering ($S_1$) data destined to each of said plurality of mobile stations in a corresponding queue ($11_1...11_K$);
starting a feedback phase by obtaining ($S_2$) for each channel a first channel state corresponding to the achievable rate of the mobile station with the biggest queue length, during a feedback elementary period corresponding to a fraction of a time slot;
estimating ($S_3$) for each channel first values representative of a gain in knowing the achievable rates of each of the other mobile stations based on the obtained first channel state, on said biggest queue length and on the queue length associated with each of the other mobile stations;
stopping the feedback phase and scheduling ($S_4$) for the rest of the associated timeslot said mobile station with the biggest queue length on selected channels for which corresponding first values are greater than a first threshold value; else
continuing ($S_5$) the feedback phase only for non-selected channels by broadcasting said first channel state to the other mobile stations on each non-selected channel.

2.    A method according to claim 1, wherein estimating ($S_3$) for each channel said first values comprises calculating each of said first values according to the expression

$$\frac{1-\beta}{1-3\beta} \times \frac{Q_{k*}(t)}{Q_k(t)} \times R_{k*n}(t)$$

where

$R_{k*n}(t)$ is the obtained first channel state for channel n,
$\beta$ is the fraction of the time slot for a feedback elementary period,
$Q_{k*}(t)$ is the biggest queue length and
$Q_k(t)$ is the queue length associated with a mobile station k.

3.    A method according to anyone of the preceding claims, wherein continuing ($S_5$) the feedback phase further comprises, for each non-selected channel :

a) obtaining ($S_{51}$) the achievable rates of a subset of mobile stations among said other mobile stations, wherein said subset is limited to the mobile stations having an achievable rate greater than the obtained first channel state;
b) identifying ($S_{52}$) within said subset the best candidate for scheduling based on the obtained achievable rates and on the queue lengths associated with the mobile stations for which an achievable rate has been obtained;
c) estimating ($S_{53}$) second values representative of a gain in knowing the achievable rates of each of the mobile stations not belonging to said subset based on the obtained achievable rate, on the queue length of said each of the mobile stations not belonging to said subset, and on the queue lengths associated with the mobile stations for which an achievable rate has been obtained;
d) stopping the feedback phase and scheduling ($S_{54}$) for the rest of the associated timeslot said best candidate on second selected channels for which corresponding second values are greater than said first threshold value; else
e) continuing ($S_{55}$) the feedback phase only for a new subset of non-selected channels by repeating steps a) to e).

4.    A method according to claim 3, wherein identifying ($S_{52}$) within said subset the best candidate comprises finding a mobile station i of said subset which meets the expression

$$\max_{i \in U_n(m)} \left( Q_i(t) \times R_{in}(t) \right)$$

where $U_n(m)$ represents the set of mobile stations associated with channel n for which an achievable rate has been obtained,

$Q_i(t)$ is the queue length of mobile station i, and

$R_{in}(t)$ is the obtained achievable rate for mobile station i and channel n.

5. A method according to claims 3 or 4, wherein estimating ($S_{53}$) said second values comprise calculating each of said second values according to the expression

$$\frac{1 - m\beta}{1 - (m+1)\beta} \cdot \frac{\max\limits_{i \in U_n(m)} \left( Q_i(t) \times R_{in}(t) \right)}{Q_k(t)}$$

where

$U_n(m)$ represents the set of mobile stations associated with channel n for which an achievable rate has been obtained,

$R_{in}(t)$ is the obtained channel state for mobile station i and channel n,

$Q_i(t)$ is the queue length of mobile station i,

$\beta$ is the fraction of the time slot for a feedback elementary period, and

$Q_k(t)$ is the queue length associated with a mobile station k.

6. A method according to anyone of claims 1-3, wherein said achievable rates are calculated by the mobile stations ($MS_1...MS_K$) using a pilot sequence broadcast by said base station (BS).

7. A method according to anyone of the preceding claims, wherein said first threshold value consists of the maximum achievable rate in a channel.

8. A multi-channel base station (BS) in a wireless Time Division Duplex closed-loop communication system, said multi-channel base station (BS) comprising:

a plurality of queues ($11_1...11_K$) for buffering data destined to a plurality of mobile stations ($MS_1$ to $MS_K$); and
a scheduler (13),

**characterized in that** said scheduler (13) is configured to:

start a feedback phase by obtaining for each channel a first channel state corresponding to the achievable rate of the mobile station with the biggest queue length, during a feedback elementary period corresponding to a fraction of a time slot;
estimate for each channel first values representative of a gain in knowing the achievable rates of each of the other mobile stations based on the obtained first channel state, on said biggest queue length and on the queue length associated with each of the other mobile stations;
stop the feedback phase and scheduling for the rest of the associated timeslot said mobile station with the biggest queue length on selected channels for which corresponding first values are greater than a first threshold value; else
continue the feedback phase only for non-selected channels by broadcasting said first channel state to the other mobile stations on each non-selected channel.

**Patentansprüche**

1. Verfahren zum Steuern einer Funkfrequenzübertragung über eine Abwärtsstrecke an mindestens eine mobile Station unter einer Vielzahl von mobilen Stationen ($MS_1$, ..., $MS_K$), von einer Mehrkanal-Basisstation (BS) in einem drahtlosen Zeitduplex-Kommunikationssystem mit geschlossener Schleife, wobei das besagte Verfahren die folgenden Schritte an der Basisstation (BS) umfasst:

Puffern ($S_1$) von Daten, die für jede der besagten Vielzahl von mobilen Stationen in einer entsprechenden Warteschlange ($11_1$, ..., $11_K$) bestimmt sind;

Starten einer Rückkopplungsphase durch Erhalten ($S_2$), für jeden Kanal, eines erstes Kanalzustands entsprechend der erreichbaren Rate der mobilen Station mit der größten Warteschlangenlänge, während einer Rückkopplungs-Taktperiode entsprechend einem Bruchteil eines Zeitschlitzes;

Schätzen ($S_3$), für jeden Kanal, von ersten Werten, die bezeichnend sind für eine Verstärkung im Kennen der erreichbaren Raten von jeder der anderen mobilen Stationen basierend auf dem erhaltenen ersten Kanalzustand, auf der besagten größten Warteschlangenlänge und auf der Warteschlangenlänge in Verbindung mit jeder der anderen mobilen Stationen;

Stoppen der Rückkopplungsphase und Planen ($S_4$), für den Rest des zugeordneten Zeitschlitzes, der besagten mobilen Station mit der größten Warteschlangenlänge auf ausgewählten Kanälen, für die entsprechende erste Werte größer sind als ein erster Grenzwert; ansonsten

Fortsetzen ($S_5$) der Rückkopplungsphase nur für nicht-ausgewählte Kanäle durch Rundsenden des besagten ersten Kanalzustands an die anderen mobilen Stationen auf jedem nicht-ausgewählten Kanal.

2. Verfahren nach Anspruch 1, wobei das Schätzen ($S_3$), für jeden Kanal, der besagten ersten Werte das Berechnen von jedem der besagten ersten Werte gemäß folgendem Ausdruck umfasst:

$$\frac{1-\beta}{1-3\beta} \times \frac{Q_{k*}(t)}{Q_k(t)} \times R_{k*_n}(t)$$

wobei

$R_{k*_n}(t)$ der erhaltene erste Kanalzustand für Kanal n ist,
$\beta$ der Bruchteil des Zeitschlitzes für eine Rückkopplungs-Taktperiode ist,
$Q_{k*}(t)$ die größte Warteschlangenlänge ist und
$Q_k(t)$ die Warteschlangenlänge in Verbindung mit einer mobilen Station k ist.

3. Verfahren nach einem beliebigen der vorstehenden Ansprüche, wobei das Fortsetzen ($S_5$) der Rückkopplungsphase für jeden nicht-ausgewählten Kanal weiterhin Folgendes umfasst:

a) Erhalten ($S_{51}$) der erreichbaren Raten einer Teilgruppe von mobilen Stationen unter den besagten anderen mobilen Stationen, wobei die besagte Teilgruppe auf die mobilen Stationen beschränkt ist, die eine erreichbare Rate aufweisen, die größer ist als der erhaltene erste Kanalzustand;

b) Identifizieren ($S_{52}$), innerhalb der besagten Teilgruppe, des besten Kandidaten für die Planung basierend auf den erhaltenen erreichbaren Raten und auf den Warteschlangenlängen in Verbindung mit den mobilen Stationen, für die eine erreichbare Rate erhalten wurde;

c) Schätzen ($S_{53}$) von zweiten Werten, die bezeichnend sind für eine Verstärkung im Kennen der erreichbaren Raten von jeder der mobilen Stationen, die nicht zu der besagten Teilgruppe gehören, basierend auf der erhaltenen erreichbaren Rate, auf der Warteschlangenlänge von jeder besagten der mobilen Stationen, die nicht zu der besagten Teilgruppe gehören, und auf den Warteschlangenlängen in Verbindung mit den mobilen Stationen, für die eine erreichbare Rate erhalten wurde;

d) Stoppen der Rückkopplungsphase und Planen ($S_{54}$), für den Rest des zugeordneten Zeitschlitzes, des besagten besten Kandidaten auf zweiten ausgewählten Kanälen, für die entsprechende zweite Werte größer sind als der besagte erste Grenzwert; ansonsten

e) Fortsetzen ($S_{55}$) der Rückkopplungsphase nur für eine neue Teilgruppe von nicht-ausgewählten Kanälen durch Wiederholen der Schritte a) bis e).

4. Verfahren nach Anspruch 3, wobei das Identifizieren ($S_{52}$), innerhalb der besagten Teilgruppe, des besten Kandidaten das Finden einer mobilen Station i aus der besagten Teilgruppe umfasst, die folgenden Ausdruck erfüllt:

$$\max_{i \in U_n(m)} \left( Q_i(t) \times R_{in}(t) \right)$$

wobei $U_n(m)$ die Gruppe von mobilen Stationen in Verbindung mit Kanal n bezeichnet, für die eine erreichbare Rate erhalten wurde,
$Q_i(t)$ die Warteschlangenlänge der mobilen Station i ist und
$R_{in}(t)$ die erhaltene erreichbare Rate für die mobile Station i und Kanal n ist.

5. Verfahren nach Anspruch 3 oder 4, wobei das Schätzen ($S_{53}$) der besagten zweiten Werte das Berechnen von jedem der besagten zweiten Werte gemäß folgendem Ausdruck umfasst:

$$\frac{1 - m\beta}{1 - (m+1)\beta} \cdot \frac{\max_{i \in U_n(m)} \left( Q_i(t) \times R_{in}(t) \right)}{Q_k(t)}$$

wobei

$U_n(m)$ die Gruppe von mobilen Stationen in Verbindung mit Kanal n bezeichnet, für die eine erreichbare Rate erhalten wurde,
$R_{in}(t)$ der erhaltene Kanalzustand für die mobile Station i und Kanal n ist,
$Q_i(t)$ die Warteschlangenlänge der mobilen Station i ist,
$\beta$ der Bruchteil des Zeitschlitzes für eine Rückkopplungs-Taktperiode ist und
$Q_k(t)$ die Warteschlangenlänge in Verbindung mit einer mobilen Station k ist.

6. Verfahren nach einem beliebigen der Ansprüche 1 bis 3, wobei die besagten erreichbaren Raten von den mobilen Stationen ($MS_1$, ..., $MS_K$) unter Verwendung einer Pilotsequenz berechnet werden, die von der besagten Basisstation (BS) rundgesendet wird.

7. Verfahren nach einem beliebigen der vorstehenden Ansprüche, wobei der besagte erste Grenzwert aus der maximal erreichbaren Rate in einem Kanal besteht.

8. Mehrkanal-Basisstation (BS) in einem drahtlosen Zeitduplex-Kommunikationssystem mit geschlossener Schleife, wobei die besagte Mehrkanal-Basisstation (BS) Folgendes umfasst:

eine Vielzahl von Warteschlangen ($11_1$, ..., $11_K$) zum Puffern von Daten, die für eine Vielzahl von mobilen Stationen ($MS_1$ bis $MS_K$) bestimmt sind; und
einen Planer (13),

**dadurch gekennzeichnet, dass** der Planer (13) ausgelegt ist zum:

Starten einer Rückkopplungsphase durch Erhalten, für jeden Kanal, eines erstes Kanalzustands entsprechend der erreichbaren Rate der mobilen Station mit der größten Warteschlangenlänge, während einer Rückkopplungs-Taktperiode entsprechend einem Bruchteil eines Zeitschlitzes;
Schätzen, für jeden Kanal, von ersten Werten, die bezeichnend sind für eine Verstärkung im Kennen der erreichbaren Raten von jeder der anderen mobilen Stationen basierend auf dem erhaltenen ersten Kanalzustand, auf der besagten größten Warteschlangenlänge und auf der Warteschlangenlänge in Verbindung mit jeder der anderen mobilen Stationen;
Stoppen der Rückkopplungsphase und Planen, für den Rest des zugeordneten Zeitschlitzes, der besagten mobilen Station mit der größten Warteschlangenlänge auf ausgewählten Kanälen, für die entsprechende erste Werte größer sind als ein erster Grenzwert; ansonsten
Fortsetzen der Rückkopplungsphase nur für nicht-ausgewählte Kanäle durch Rundsenden des besagten ersten Kanalzustands an die anderen mobilen Stationen auf jedem nicht-ausgewählten Kanal.

**Revendications**

1. Procédé de contrôle d'une transmission radiofréquence sur une liaison descendante vers au moins une station mobile parmi une pluralité de stations mobiles ($MS_1...MS_K$), depuis une station de base multicanaux (BS) dans un réseau de communication sans fil duplex à répartition dans le temps en boucle fermée, ledit procédé comprenant les étapes suivantes au niveau de la station de base (BS) :

   mettre en mémoire tampon ($S_1$) les données destinées à chaque station de ladite pluralité de stations mobiles dans une file d'attente correspondante ($11_1...11_K$) ; démarrer une phase de rétroaction en obtenant (S2) pour chaque canal un premier état de canal correspondant au débit possible de la station mobile ayant la longueur de file d'attente la plus grande, pendant une période élémentaire de rétroaction correspondant à une fraction d'un intervalle de temps ;
   estimer ($S_3$) pour chaque canal des premières valeurs représentant un gain en connaissant les débits possibles de chacune des autres stations mobiles en fonction du premier état de canal obtenu, de ladite longueur de file d'attente la plus grande et de la longueur de file d'attente associée à chacune des autres stations mobiles ;
   arrêter la phase de rétroaction et planifier ($S_4$) pour le reste de l'intervalle de temps associé ladite station mobile ayant la longueur de file d'attente la plus grande sur des canaux sélectionnés pour lesquels les premières valeurs correspondantes sont supérieures à une première valeur de seuil ; sinon
   poursuivre ($S_5$) la phase de rétroaction uniquement pour les canaux non sélectionnés en diffusant ledit premier état de canal aux autres stations mobiles sur chaque canal non sélectionné.

2. Procédé selon la revendication 1, dans lequel l'estimation ($S_3$) pour chaque canal desdites premières valeurs comprend le calcul de chacune desdites premières valeurs selon l'expression

$$\frac{1-\beta}{1-3\beta} \times \frac{Q_{k*}(t)}{Q_k(t)} \times R_{k*n}(t)$$

   où

   $R_{k*n}(t)$ est le premier état de canal obtenu pour le canal n,
   ß est la fraction de l'intervalle de temps pour une période élémentaire de rétroaction,
   $Q_{k*}(t)$ est la longueur de file d'attente la plus grande et
   $Q_k(t)$ est la longueur de file d'attente associée à une station mobile k.

3. Procédé selon l'une quelconque des revendications précédentes, dans lequel la poursuite ($S_5$) de la phase de rétroaction comprend en outre, pour chaque canal non sélectionné, les étapes suivantes :

   a) obtenir ($S_{51}$) les débits possibles d'un sous-ensemble de stations mobiles parmi lesdites autres stations mobiles, ledit sous-ensemble étant limité aux stations mobiles dont le débit possible est supérieur au premier état de canal obtenu ;
   b) identifier ($S_{52}$) dans ledit sous-ensemble le meilleur candidat pour la planification en fonction des débits possibles obtenus et des longueurs de file d'attente associées aux stations mobiles pour lesquelles un débit possible a été obtenu ;
   c) estimer ($S_{53}$) des deuxièmes valeurs représentant un gain en connaissant les débits possibles de chacune des stations mobiles n'appartenant pas audit sous-ensemble en fonction du débit possible obtenu, de la longueur de file d'attente de chacune desdites stations mobiles n'appartenant pas audit sous-ensemble, et des longueurs de file d'attente associées aux stations mobiles pour lesquelles un débit possible a été obtenu ;
   d) arrêter la phase de rétroaction et planifier ($S_{54}$) pour le reste de l'intervalle de temps associé ledit meilleur candidat sur les deuxièmes canaux sélectionnés pour lesquels les deuxièmes valeurs correspondantes sont supérieures à la première valeur de seuil ; sinon
   e) poursuivre ($S_{55}$) la phase de rétroaction uniquement pour un nouveau sous-ensemble de canaux non sélectionnés en répétant les étapes a) à e).

4. Procédé selon la revendication 3, dans lequel l'identification ($S_{52}$) dans ledit sous-ensemble du meilleur candidat comprend la recherche d'une station mobile i dudit sous-ensemble qui satisfait à l'expression

$$\max_{i \in U_n(m)} \left( Q_i(t) \times R_{in}(t) \right)$$

où $U_n(m)$ représente l'ensemble des stations mobiles associées au canal n pour lesquelles un débit possible a été obtenu,

$Q_i(t)$ est la longueur de file d'attente de la station mobile i, et

$R_{in}(t)$ est le débit possible obtenu pour la station mobile i et le canal n.

5. Procédé selon les revendications 3 ou 4, dans lequel l'estimation ($S_{53}$) desdites deuxièmes valeurs comprend le calcul de chacune desdites deuxièmes valeurs selon l'expression

$$\frac{1 - m\beta}{1 - (m+1)\beta} \cdot \frac{\max\limits_{i \in U_n(m)} \left( Q_i(t) \times R_{in}(t) \right)}{Q_k(t)}$$

où

$U_n(m)$ représente l'ensemble des stations mobiles associées au canal n pour lesquelles un débit possible a été obtenu,

$R_{in}(t)$ est le débit possible obtenu pour la station mobile i et le canal n,

$Q_i(t)$ est la longueur de file d'attente de la station mobile i,

ß est la fraction de l'intervalle de temps pour une période élémentaire de rétroaction, et

$Q_k(t)$ est la longueur de file d'attente associée à une station mobile k.

6. Procédé selon l'une quelconque des revendications 1 à 3, dans lequel lesdits débits possibles sont calculés par les stations mobiles ($MS_1...M_{SK}$) à l'aide de la diffusion d'une séquence pilote par ladite station de base (BS).

7. Procédé selon l'une quelconque des revendications précédentes, dans lequel ladite première valeur de seuil est le débit possible maximal sur un canal.

8. Station de base multicanaux (BS) dans un réseau de communication sans fil duplex à répartition dans le temps en boucle fermée, ladite station de base multicanaux (BS) comprenant :

une pluralité de files d'attente ($11_1...11_K$) pour mettre en mémoire tampon les données destinées à une pluralité de stations mobiles ($MS_1$ à $MS_K$) ; et
un ordonnanceur (13),

**caractérisé en ce que** ledit ordonnanceur (13) est configuré pour :

démarrer une phase de rétroaction en obtenant pour chaque canal un premier état de canal correspondant au débit possible de la station mobile ayant la longueur de file d'attente la plus grande, pendant une période élémentaire de rétroaction correspondant à une fraction d'un intervalle de temps ;
estimer pour chaque canal des premières valeurs représentant un gain en connaissant les débits possibles de chacune des autres stations mobiles en fonction du premier état de canal obtenu, de ladite longueur de file d'attente la plus grande et de la longueur de file d'attente associée à chacune des autres stations mobiles ;
arrêter la phase de rétroaction et planifier pour le reste de l'intervalle de temps associé ladite station mobile ayant la longueur de file d'attente la plus grande sur des canaux sélectionnés pour lesquels les premières valeurs correspondantes sont supérieures à une première valeur de seuil ; sinon
poursuivre la phase de rétroaction uniquement pour les canaux non sélectionnés en diffusant ledit premier état de canal aux autres stations mobiles sur chaque canal non sélectionné.

Time slot T<sub>S</sub>

| Feedback Phase | Transmission to the scheduled user |

# FIG.1

# FIG.2

Buffering data destined to each mobile station $MS_k$ in a corresponding queue — $S_1$

Start of feedback phase
$S = \emptyset$
$U_n = \emptyset$

Obtaining for each channel n the channel state $R_{k*n}(t)$ of mobile station $MS_{k*}$ with the biggest queue length — $S_2$

Estimating for each channel n and each mobile station $MS_k$ (k ≠ k*) — $S_3$

$$r_{thr,k,n} = \frac{1-\beta}{1-3\beta} \times \frac{Q_{k*}(t)}{Q_k(t)} \times R_{k*n}(t)$$

$S_4$

Y $\quad$ $r_{thr,k,n} \geq r_L$ ? $\quad$ N

Scheduling mobile station $MS_{k*}$ for channel n

End of feedback phase
for channel n
$S = \{n\}$
$U_n = \{k*\}$

feedback phase continue for channels

$S_5$

Continuing the feedback phase and broadcast $R_{k*n}(t)$ (see figure 3b)

**FIG. 3a**

16

Obtaining for each channel n (n $\notin$ S) the channel state $R_{kp}(t)$ of each mobile station $MS_k$ ($\notin U_n$) if $R_{kp}(t) > R_{k*n}(t)$ $\quad S_{51}$

Identifying mobile station $MS_i$ ($\notin U_n$) with $\quad S_{52}$

$$\max_{i \in U_n(m)} \left( Q_i(t) \times R_{in}(t) \right)$$

Estimating for each channel n (n $\notin$ S) and each mobile station $MS_k$ ($\notin U_n$) $\quad S_{53}$

$$r_{thr,k,n}(m) = \frac{1 - m\beta}{1 - (m+1)\beta} \cdot \frac{\max\limits_{i \in U_n(m)} \left( Q_i(t) \times R_{in}(t) \right)}{Q_k(t)}$$

Y $\qquad$ $r_{thr,k,n} \geq r_L$ ? $\qquad$ N

$S_{54}$

Scheduling mobile station $MS_i$ for channel n
Update S
Update $U_n = \{k*; i\}$

$S_{55}$

Update S
Update $U_n = \{k*; i\}$

## FIG.3b

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. L. STOLYAR.** Maxweight scheduling in a generalized switch: State space collapse and workload minimization in heavy traffic. *Annals of Applied Probability,* November 2004, vol. 14 (1), 1-53

- **P. CHAPORKAR ; A. PROUTIERE ; H. ASNANI ; A. KARANDIKAR.** Scheduling with limited information in wireless systems. *Proc. of ACM Mobihoc '09,* 2009, 75-84
- **M. KARACA ; Y. SARIKAYA ; O. ERCETIN ; T. ALPCAN ; H. BOCHE.** *Throughput optimal scheduling with dynamic channel feedback*